# EUROPÄISCHE PATENTSCHRIFT

(11) **EP 2 626 584 B1**
(45) Veröffentlichungstag und Bekanntmachung des Hinweises auf die Patenterteilung: **26.03.2014**
(21) Anmeldenummer: 12000810.7
(22) Anmeldetag: 08.02.2012
(51) Int. Cl.: F16D 35/02

(54) **Flüssigkeitsreibungskupplung**
hydraulic coupling
couplage hydraulique

(43) Veröffentlichungstag der Anmeldung: 14.08.2013
(73) Patentinhaber: BorgWarner Inc., Auburn Hills, MI 48326 (US)
(72) Erfinder: Buchholz, Thomas, 78333 Stockach (DE)
(74) Vertreter: Schmitz, Hans-Werner

(56) Entgegenhaltungen:
- EP-A1- 0 135 827
- EP-B1- 1 731 787
- GB-A- 1 576 736
- US-A- 5 931 273

## Beschreibung

Die Erfindung betrifft eine Flüssigkeitsreibungskupplung gemäß dem Oberbegriff des Anspruches 1.

Eine derartige Flüssigkeitsreibungskupplung ist aus der EP 1 731 787 B1 bekannt, deren Offenbarungsgehalt hiermit durch explizite Bezugnahme zum Offenbarungsgehalt vorliegender Anmeldung gemacht wird.

Aus der DE 197 49 342 A1 ist eine Visko-Kupplung zum Antrieb von KFZ-Klimaverdichtern bekannt, bei der zur Steuerung des Füllgrades von Fluid in einer Arbeitskammer der Durchsatz von Fluid durch den an einen Eingangsabschnitt eines Schöpfrohres anschließenden Rohrabschnitt mittels eines Ventils gesteuert wird. Im Rahmen der Erfindung durchgeführte Untersuchungen haben jedoch ergeben, dass ein derartiges Ventil insofern Probleme verursacht, als es äußerst schwierig ist, annehmbare Leistungsergebnisse zu erreichen.

Es ist daher Aufgabe der vorliegenden Erfindung, eine Flüssigkeitsreibungskupplung der im Oberbegriff des Anspruches 1 angegebenen Art zu schaffen, mit der es auf einfache Art und Weise ohne Verwendung eines Ventils möglich ist, einen variablen Kupplungsflüssigkeitsfluss zu erzielen.

Die Lösung dieser Aufgabe erfolgt durch die Merkmale des Anspruchs 1.

Durch das Vorsehen eines Pumpenelementes, das mit einer Ringwand in der Vorratskammer einen Scherspalt definiert, wird es möglich gemacht, auf einfache Art und Weise durch Ausnutzung einer Differenzdrehzahl zwischen dem Pumpenelement und der Ringwand bzw. der Primärseite der Flüssigkeitsreibungskupplung einen variablen Volumenstrom von der Vorwärtskammer in die Arbeitskammer zu erzeugen, ohne dass es hierfür nötig ist, zusätzlich ein steuerbares Ventil in den Strömungsweg zu integrieren.

Zu den besonderen Vorteilen der erfindungsgemäßen Flüssigkeitsreibungskupplung zählt zunächst, dass nur eine geringe Menge an Kupplungsflüssigkeit erforderlich ist, da aufgrund der zuvor erläuterten Anordnung eine aktive Förderpumpe im Ölreservoir gebildet wird, was hinsichtlich der Kupplungsflüssigkeitsmenge gegenüber dem bekannten Ausnutzen von Zentrifugalkräften zum Füllen der Arbeitskammer vorteilhaft ist.

Ferner wird das Ansprechverhalten der erfindungsgemäßen Flüssigkeitsreibungskupplung aufgrund des niedrigeren Kupplungsflüssigkeitsanteils schneller.

Es ergibt sich ferner eine äußerst kompakte Bauweise, da der Außendurchmesser der Vorratskammer bzw. des Reservoirs größer gemacht werden kann, als der Innendurchmesser der Arbeitskammer.

Die kompakte Bauweise wird noch dadurch verbessert, dass, wie zuvor bereits erläutert, eine Veränderbarkeit des Kupplungsflüssigkeitsflusses ohne Verwendung einer Ventilanordnung möglich gemacht wird.

Das Pumpenelement, das einen Druck aufbaut, wobei ein Volumenstrom durch Reibung der Kupplungsflüssigkeit im vorzugsweise klein gehaltenen Scherspalt erzeugt wird, kann entweder mit dem E-Motor oder der Kupplungsscheibe verbunden werden. Ist das Pumpenelement mit dem E-Motor verbunden, wozu vorzugsweise eine Steuerwelle vorgesehen ist, ist die in der Vorratskammer angeordnete Ringwand mit der Kupplungsscheibe verbunden.

Alternativ ist es möglich, die Ringwand, vorzugsweise über eine Steuerwelle, mit dem E-Motor zu koppeln und dementsprechend das Pumpenelement mit der Kupplungsscheibe zu verbinden.

Das Wirkorgan (z.B. Pumpenrad, Lüfterrad, Luftkompressor usw.) ist am Gehäuse befestigt.

Die Unteransprüche haben vorteilhafte Weiterbildungen der Erfindung zum Inhalt.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine schematisch vereinfachte Prinzipdarstellung einer erfindungsgemäßen Flüssigkeitsreibungskupplung,
- Fig. 2: eine schematisch vereinfachte Darstellung der Einzelheit A in Fig. 1,
- Fig. 3: eine der Fig. 1 entsprechende Prinzipdarstellung einer zweiten Ausführungsform, und
- Fig. 4: eine der Fig. 2 entsprechende Detaildarstellung der Einzelheit B in Fig. 2.

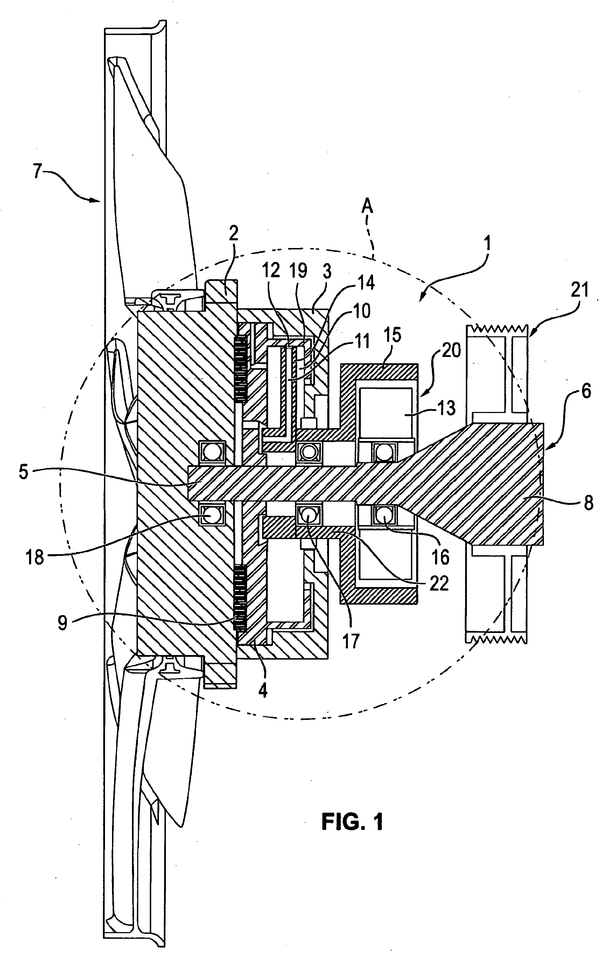

In Fig. 1 ist eine vereinfachte Schemadarstellung einer erfindungsgemäßen Flüssigkeitsreibungskupplung 1 dargestellt, die ein Gehäuse aufweist, das üblicherweise aus einem Deckel 2 und einem Gehäusekörper 3 aufgebaut ist.

Im Gehäuse 2, 3 ist eine Kupplungsscheibe 4 angeordnet, die gegenüber dem Gehäuse 2, 3 drehbar ist. Die Kupplungsscheibe 4 ist hierbei drehfest an einem Ende 5 einer zentral innerhalb des Gehäuses 2, 3 gelagerten Welle 6 angeordnet. Am Gehäusekörper 3 ist ein schematisch vereinfacht dargestelltes antreibbares Wirkorgan 7 fixiert, das beispielsweise als Pumpenrad oder als Lüfterrad ausgebildet sein kann.

Eine Arbeitskammer 9 ist zwischen dem Gehäusekörper 2 und der Kupplungsscheibe 4 angeordnet, die Arbeitsspalte aufweist, die aufgrund einer Scherwirkung auf die der Arbeitskammer 9 zugeführten Kupplungsflüssigkeit eine Drehmomentübertragung möglich machen.

Ferner ist eine Vorratskammer 10 für die genannte Kupplungsflüssigkeit vorgesehen, wobei ein Zuführkanal 11 von der Vorratskammer 10 zur Arbeitskammer 9 führt.

Am anderen Ende 8 der Welle 6 ist ein Antriebsorgan 21, wie beispielsweise eine Riemenscheibe, angeordnet. Die Flüssigkeitsreibungskupplung 1 weist ferner ein stationäres Kupplungsteil 13 auf, das auf der Welle 6 über ein Lager 16 gelagert ist und das den Stator eines Elektromotors 20 bildet, der ferner einen Rotor 15 umfasst.

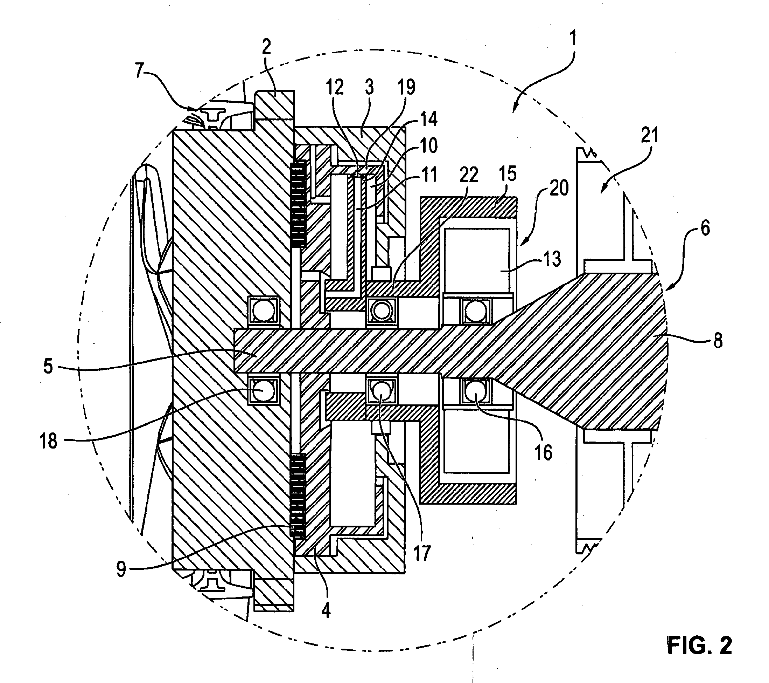

Wie ferner eine Zusammenschau der Fig. 1 und 2 zeigt, zeichnet sich die erfindungsgemäße Reibungskupplung 1 durch das Vorsehen eines Pumpenelements 14 aus, das im dargestellten Beispielsfalle an seinem radialen Außenrand einen Scherspalt 12 mit einer Ringwand 19 begrenzt.

Wie die Ausführungsformen gemäß den Fig. 1 und 2 zeigen, ist das Pumpenelement 14 über eine Steuerwelle 22 mit dem E-Motor 20 gekoppelt. Die Ringwand 19 ist mit der Kupplungsscheibe 4 verbunden, die verdrehfest auf dem Ende 5 der Welle 6 angebracht ist. Dies bedeutet, dass bei dieser Ausführungsform das Pumpenelement 14 mittels des Elektromotors 20 in seiner Drehzahl regel- bzw. steuerbar ist, wohingegen die Ringwand 19 mit der Drehzahl der Kupplungsscheibe 4 umläuft.

Zur Lagerung der Steuerwelle 22 ist ein Lager 17 vorgesehen, das die Steuerwelle 22 gegenüber der Welle 6 führt.

Der Stator 13 ist über ein Lager 16 auf der Welle 6 gelagert.

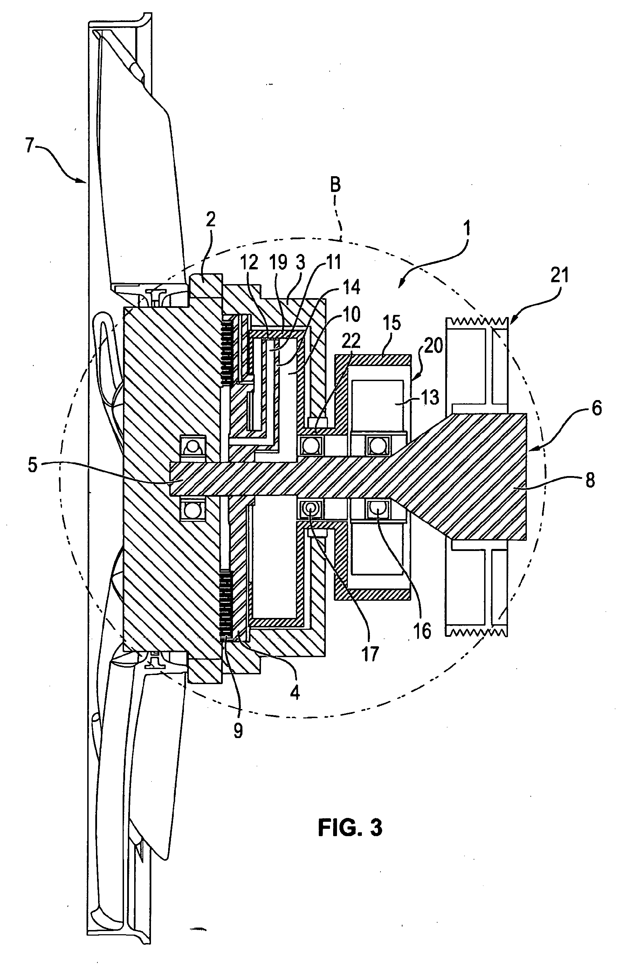

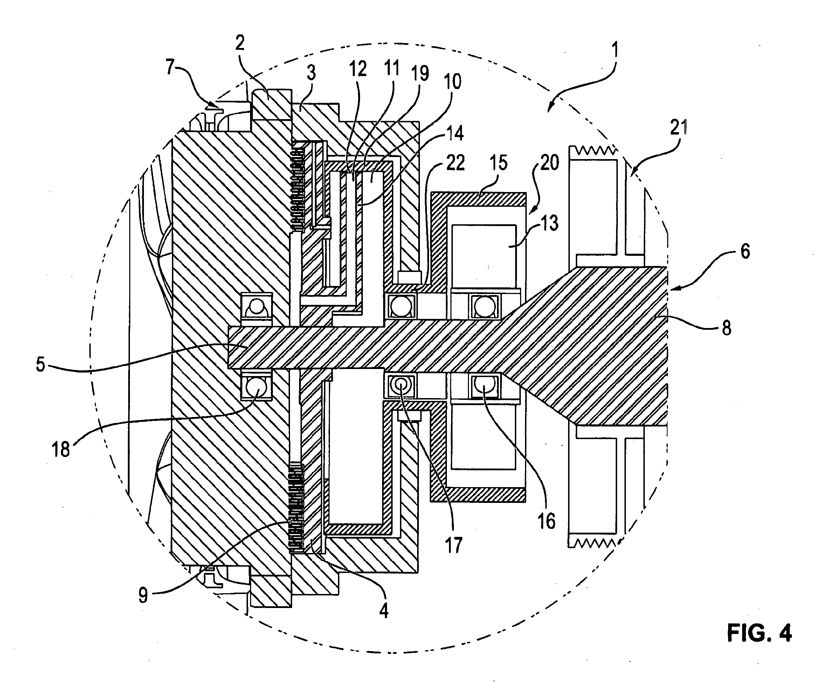

Aus einer Zusammenschau der Fig. 3 und 4 ergibt sich der Aufbau und die Funktionsweise der zweiten Ausführungsform der erfindungsgemäßen Flüssigkeitskupplung 1. Alle Teile, die diejenigen der Ausführungsform gemäß den Fig. 1 und 2 entsprechen, sind mit den gleichen Bezugszeichen gekennzeichnet, so dass diesbezüglich auf die voranstehende Beschreibung Bezug genommen werden kann.

Im Unterschied zur Ausführungsform gemäß den Fig. 1 und 2 ist bei der Ausführungsform gemäß Fig. 3 und 4 die Ringwand 19 über eine Steuerwelle 22 mit dem E-Motor 20 gekoppelt, während das Pumpenelement 14 mit der Kupplungsscheibe 4 verbunden ist. Dies bedeutet, dass bei dieser Ausführungsform die Ringwand 19 mittels des Elektromotors 20 in ihrer Drehzahl steuer- bzw. regelbar ist, wohingegen das Pumpenelement 14 mit der Drehzahl der Kupplungsscheibe 4 umläuft.

Beiden Ausführungsformen ist gemein, dass die Schergeschwindigkeit im Scherspalt 12 mittels des Elektromotors 20 geregelt werden kann. Hieraus ergeben sich die eingangs erläuterten besonderen Vorteile der beiden Ausführungsformen gemäß den Fig. 1 und 2 bzw. 3 und 4.

Neben der schriftlichen Offenbarung der Erfindung wird hiermit explizit zur Komplettierung der Offenbarung auf die zeichnerische Darstellung in den Fig. 1 bis 4 Bezug genommen.

### Bezugszeichenliste

- 1: Flüssigkeitsreibungskupplung
- 2, 3: Gehäuse (2: Deckel, 3: Gehäusekörper)
- 4: Kupplungsscheibe
- 5: Erstes Ende der Welle 6
- 6: Welle
- 7: Wirkorgan (z.B. Pumpenrad, Lüfterrad usw.)
- 8: Zweites Ende der Welle 6
- 9: Arbeitskammer
- 10: Vorratskammer
- 11: Zuführkanal
- 12: Scherspalt
- 13: Stationäres Kupplungsteil (Stator des Elektromotors 20)
- 14: Pumpenelement
- 15: Rotor des Elektromotors
- 16: Lager
- 17: Lager
- 18: Lager
- 19: Ringwand
- 20: Elektromotor
- 21: Antriebsorgan, insbesondere Riemenscheibe auf der Welle 6
- 22: Steuer- bzw. Regelwelle

## Patentansprüche

1. Flüssigkeitsreibungskupplung (1)
- mit einem Gehäuse (2, 3)
- mit einer Kupplungsscheibe (4),
■ die gegenüber dem Gehäuse (2, 3) drehbar ist, und
■ die drehbar an einem Ende (5) einer zentral innerhalb des Gehäuses (2, 3) gelagerten Welle (6) angeordnet ist;
- mit einer Arbeitskammer (9) zwischen dem Gehäuse (2, 3) und der Kupplungsscheibe (4);
- mit einer Vorratskammer (10) für Kupplungsflüssigkeit;
- mit einem Zuführkanal (11), der von der Vorratskammer (10) zur Arbeitskammer (9) führt;
- mit einem stationären Kupplungsteil (13), gegenüber dem das Gehäuse (2, 3) drehbar ist; und
- mit einem Pumpenelement (14), **dadurch gekennzeichnet,**
- **dass** das Pumpenelement (14) mit einer in der Vorratskammer (10) angeordneten Ringwand (19) einen Scherspalt (12) definiert,
- **dass** ein Wirkorgan (7) am Gehäuse (2, 3) befestigt ist, und
- **dass** die Schergeschwindigkeit im Scherspalt (12) mittels eines E-Motors (20) regelbar ist, der auf der Welle (6) gelagert ist.

2. Flüssigkeitsreibungskupplung nach Anspruch 1, **dadurch gekennzeichnet,**
- **dass** das Pumpenelement (14) mit dem E-Motor (20) über eine Steuerwelle (22) gekoppelt ist, und **dass** die Ringwand (19) mit der Kupplungsscheibe (4) verbunden ist.

3. Flüssigkeitsreibungskupplung nach Anspruch 1, **dadurch gekennzeichnet,**
- **dass** die Ringwand (19) über eine Steuerwelle (22) mit dem E-Motor (20) gekoppelt ist, und
- **dass** das Pumpenelement (14) mit der Kupplungsscheibe (4) verbunden ist.

4. Flüssigkeitsreibungskupplung nach einem der Ansprüche 1 bis 3, **dadurch gekennzeichnet, dass** das stationäre Kupplungsteil (13) der Stator des E-Motors (20) ist.

## Claims

1. Fluid friction clutch (1)
- having a housing (2, 3)
- having a clutch disc (4)
■ which is rotatable relative to the housing (2, 3) and
■ which is rotatably arranged on an end (5) of a shaft (6) which is mounted centrally within the housing (2, 3);
- having a working chamber (9) between the housing (2, 3) and the clutch disc (4);
- having a storage chamber (10) for clutch fluid;
- having a supply duct (11) which leads from the storage chamber (10) to the working chamber (9) ;
- having a static clutch part (13) which is rotatable relative to the housing (2, 3); and
- having a pump element (14), **characterized**
- **in that** the pump element (14), together with an annular wall (19) arranged in the storage chamber (10), defines a shear gap (12),
- **in that** an active element (7) is fastened to the housing (2, 3), and
- **in that** the shear speed in the shear gap (12) can be regulated by means of an electric motor (20) which is mounted on the shaft (6).

2. Fluid friction clutch according to Claim 1, **characterized**
- **in that** the pump element (14) is coupled to the electric motor (20) via a control shaft (22), and
- **in that** the annular wall (19) is connected to the clutch disc (4).

3. Fluid friction clutch according to Claim 1, **characterized**
- **in that** the annular wall (19) is coupled to the electric motor (20) via a control shaft (22), and
- **in that** the pump element (14) is connected to the clutch disc (4).

4. Fluid friction clutch according to one of Claims 1 to 3, **characterized in that** the static clutch part (13) is the stator of the electric motor (20).

## Revendications

1. Embrayage à friction de liquide (1)
- comprenant un boîtier (2, 3)
- comprenant un disque d'embrayage (4),
- qui peut tourner par rapport au boîtier (2, 3), et
- qui est disposé de manière rotative au niveau d'une extrémité (5) d'un arbre (6) monté centralement à l'intérieur du boîtier (2, 3) ;
- comprenant une chambre de travail (9) entre le boîtier (2, 3) et le disque d'embrayage (4) ;
- comprenant une chambre de stockage (10) pour le liquide d'embrayage ;
- comprenant un canal d'amenée (11) qui va de la chambre de stockage (10) à la chambre de travail (9) ;
- comprenant une partie d'embrayage stationnaire (13), par rapport à laquelle le boîtier (2, 3) peut tourner ; et
- comprenant un élément de pompe (14), **caractérisé en ce que**
- l'élément de pompe (14) définit avec une paroi annulaire (19) disposée dans la chambre de stockage (10) une fente de cisaillement (12),
- un organe fonctionnel (7) est fixé sur le boîtier (2, 3) et
- la vitesse de cisaillement dans la fente de cisaillement (12) peut être réglée au moyen d'un moteur électrique (20) qui est monté sur l'arbre (6).

2. Embrayage à friction de liquide selon la revendication 1, **caractérisé en ce que**
- l'élément de pompe (14) est accouplé au moteur électrique (20) par le biais d'un arbre de commande (22), et
- la paroi annulaire (19) est connectée au disque d'embrayage (4).

3. Embrayage à friction de liquide selon la revendication 1, **caractérisé en ce que**
- la paroi annulaire (19) est accouplée au moteur électrique (20) par le biais d'un arbre de commande (22), et
- l'élément de pompe (14) est connecté au disque d'embrayage (4).

4. Embrayage à friction de liquide selon l'une quelconque des revendications 1 à 3, **caractérisé en ce que** la partie d'embrayage stationnaire (13) est le stator du moteur électrique (20).
